# EUROPEAN PATENT SPECIFICATION

(11) **EP 1 339 896 B1**
(45) Date of publication and mention of the grant of the patent: **16.03.2011**
(21) Application number: 01996643.1
(22) Date of filing: 13.11.2001
(51) Int. Cl.: C25C 7/02, B23K 1/19

(54) **METHOD FOR JOINING A JACKET PART TO A CORE PART**
VERFAHREN ZUM VERBINDEN EINES MANTELTEILS MIT EINEM KERNTEIL
PROCEDE D'ASSEMBLAGE D'UNE PARTIE DE REVETEMENT A UNE PARTIE CENTRALE

(30) Priority: 17.11.2000 FI 20020523
(43) Date of publication of application: 03.09.2003
(73) Proprietor: Outokumpu Oyj, 02200 Espoo (FI)
(72) Inventor: POLVI, Veikko, FIN-28200 Pori (FI); HALMINEN, Veijo, FIN-28460 Vanha-Ulvila (FI); KIVISTÖ, Tuomo, FIN-02420 Jorvas (FI)
(74) Representative: Graf Glück Habersack Kritzenberger
(86) International application number: PCT/FI2001/000984
(87) International publication number: WO 2002/040749

(56) References cited:
- WO-A1-00/17419
- DE-A1- 3 247 830
- DE-A1- 3 323 516
- US-A- 4 647 358

## Description

This invention concerns a method for connecting a pipe part to a core part, according to the preamble of patent claim 1.

The method concerned in the invention is particularly suitable for the manufacture of suspension bars for electrodes, especially for permanent cathodes, used in metal electrolysis. The suspension bar structure of the permanent cathode and joining the plate part of the permanent cathode to the suspension bar become problematic in that, in order to conduct a large electric current to the plate part, the material on the suspension bar should have high electroconductivity, such as copper. Since acid-resistant steel has poor electroconductivity, it cannot be the sole material used In the bar. Patent publication WO 00/17419 describes alternative methods for manufacturing a permanent cathode suspension bar. These are typically complex and/or require special equipments. According to methods in the prior art, manufacturing solutions have not always been able to satisfactorily preserve the electroconductive properties of the joint, especially of the metals in predominantly corrosive conditions in metals electrolysis.

Document DE 3247830 discloses brazing of copper to itself or to an alloy of steel by depositing Sn, In or Mn as alloy forming metal on the copper surface.

The purpose of this invention is to achieve a completely new type of method for joining the pipe part and core part together. Another objective of the invention is to achieve a method for the manufacture of a suspension bar for an electrode, in particular for a permanent cathode, which is technically beneficial in manufacture and highly suitable as far as the application is concerned.

The solution according to the present invention is characteristic of that mentioned in the patent claims.

A number of notable advantages are to be gained by using the solution according to the present invention. Using the solution according to the invention will achieve a good, electroconductive contact between the jacket, having poorer electroconductivity, and the core part, which has good electroconductivity. The method can be easily adapted without the need for special equipment. The method is well suited for products of different sizing and secondly, can also be applied in connection with different manufacturing volumes.

The solution according to the present invention is described in more detail with reference to the figures enclosed, as follows:

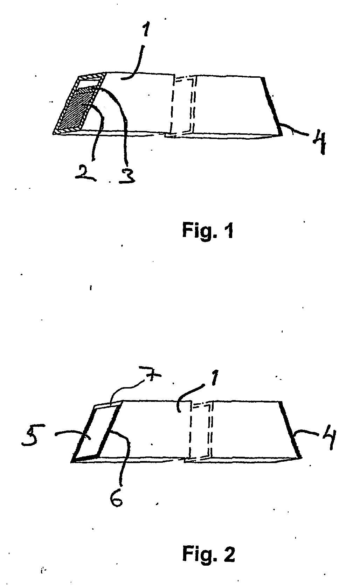

Figure 1 shows a stage of the method according to the invention prior to the welding of one of the end plates, and
Figure 2 shows a bar according to the invention, prior to the heat treatment stage.

The present invention relates to a method for joining a core part 2, having high electroconductivity, to a jacket 1, being made of refined steel. In the method the electroconductive core part 2, such as a copper bar, and the connection component 3 are placed inside the jacket 1, having poorer electroconductivity; heat treatment is applied, at least in the joint area, so that a metallurgical bond is formed between the electroconductive core part 2 and the refined steel jacket 1. The connection component 3 is substantially of the same length as the core part 2. As a rule, the connection component 3 is typically tin. The amount of the connection component 3 is dependent on the size of the gap between the jacket 1 and the core part 2, and on how large a part of the surface of the core part and the jacket is to be joined.

The jacket is a pipe part, of which at least one end is at least partly closed at least during heat treatment. Typically, the first end opening of the jacket is closed, for example by welding an end plate 4 onto it before the core part 2 and the connection component 3 are placed inside the jacket 1. In the application form according to the figures, also the other end opening of the jacket is partly closed, for example by welding an end plate 5 onto it after the core part and connection component have been placed inside the pipe. An opening 7 is then left at the end of the jacket, at least during heat treatment. This can be achieved, for example, by leaving the upper edge of the welding seam 6 of the other end plate 5 unwelded. Typically, the parts to be joined together are kept substantially horizontal during heat treatment. Then, when smelting, the tin can penetrate the entire bond area. During heat treatment the tin melt dissolves the copper from the copper bar acting as the core part 2, forming tin bronze, which at the same time begins to dissolve the inner surface of the refined steel pipe acting as the cover part 1, forming a metallic tin bronze connection between the core part 2 and the jacket 1. On one typical occasion, the heat treatment was conducted in a furnace, of which the temperature was substantially raised to over about 900 °C.

According to another application form, the heat treatment of the pieces to be joined is conducted in a position, which substantially differs from horizontal. Then the lower jacket end is typically closed, at least to the height of the desired joint surface.

The method according to the invention is suitable for the manufacture of a suspension bar for an electrode, especially a permanent cathode. In the application, by refined steel is meant stainless or acid resistant steel. By copper is meant a material, which contains mostly copper or at least 50 per cent copper.

## Claims

1. A method for connecting a highly electroconductive core part (2) to a jacket part of refined steel (1), wherein the electroconductive core part (2), such as a copper bar, and the connection component (3) in the method are placed inside the jacket (1) and are heat treated, at least the joint area of the pieces to be joined, in such a way that a metallurgical bond is formed between the electroconductive core part (2) and the jacket of refined steel (1).

2. A method according to claim 1, **characterized in that** the core part (2) is mostly copper and the connection component (3) is mostly tin, whereupon in the method a mainly tin bronze join is formed between the jacket part (1) and the core part (2).

3. A method according to claim 1 or 2, **characterized in that** the connection component (3) is mainly tin.

4. A method according to any of claims 1 - 3, **characterized in that** the jacket (1) is a pipe part, of which at least one end is at least partly closed, at least during heat treatment.

5. A method according to any of claims 1 - 4, **characterized in that** the pieces to be joined together (1,2) are kept substantially horizontal during heat treatment.

6. A method according to any of claims 1 - 5, **characterized in that** at least when the pieces to be joined (1,2) are on a horizontal plane, the connection component (3) is placed on top of core part (2) inside jacket (1) before heat treatment.

7. A method according to any of claims 1 - 4, **characterized in that** the pieces to be joined together (1,2) are kept essentially in a position, which substantially differs from horizontal during heat treatment.

8. A method according to any of claims 1 - 7, **characterized in that** a suspension bar for an electrode, especially a permanent cathode, is manufactured in the method.

## Patentansprüche

1. Verfahren zum Verbinden eines hoch elektrisch leitfähigen Kernteils (2) mit einem Mantelteil aus ausgegartem Stahl (1), wobei der elektrisch leitfähige Kernteil (2), wie beispielsweise ein Kupferriegel, und die Verbindungskomponente (3) in dem Verfahren zumindest im Verbindungsbereich der zusammenzufügenden Stücke innerhalb des Mantels (1) platziert und wärmebehandelt werden, derart, dass eine metallurgische Bondverbindung zwischen dem elektrisch leitfähigen Kernteil (2) und dem Mantel aus ausgegartem Stahl (1) gebildet wird.

2. Verfahren nach Anspruch 1, **dadurch gekennzeichnet, dass** der Kernteil (2) hauptsächlich Kupfer ist und die Verbindungskomponente (3) hauptsächlich Zinn ist, wobei durch das Verfahren hauptsächlich eine Zinn-Bronze-Verbindung zwischen dem Mantelteil (1) und dem Kernteil gebildet wird.

3. Verfahren nach Anspruch 1 oder 2, **dadurch gekennzeichnet, dass** die Verbindungskomponente (3) hauptsächlich Zinn ist.

4. Verfahren nach einem der Ansprüche 1 - 3, **dadurch gekennzeichnet, dass** der Mantel (1) ein Rohrteil ist, dessen zumindest ein Ende zumindest teilweise verschlossen ist, zumindest während der Wärmebehandlung.

5. Verfahren nach einem der Ansprüche 1 - 4, **dadurch gekennzeichnet, dass** die miteinander zu verbindenden Stücke (1, 2) während der Wärmebehandlung im Wesentlichen horizontal gehalten werden.

6. Verfahren nach einem der Ansprüche 1 - 5, **dadurch gekennzeichnet, dass** die miteinander zu verbindenden Stücke (1, 2) sich dann auf einer horizontalen Ebene befinden, wenn die Verbindungskomponente (3) oben auf dem Kernteil (2) innerhalb des Mantels (1) vor der Wärmebehandlung angeordnet wird.

7. Verfahren nach einem der Ansprüche 1 - 4, **dadurch gekennzeichnet, dass** die miteinander zu verbindenden Stücke (1, 2) im Wesentlichen in einer Position gehalten werden, die während der Wärmebehandlung im Wesentlichen von einer Horizontalen differiert.

8. Verfahren nach einem der Ansprüche 1 - 7, **dadurch gekennzeichnet, dass** gemäß dem Verfahren ein Tragriegel für eine Elektrode, insbesondere eine Dauerkathode gefertigt wird.

## Revendications

1. Procédé destiné à raccorder une partie centrale (2) hautement électroconductrice à une partie de revêtement en acier raffiné (1), dans lequel la partie centrale (2) électroconductrice, telle qu'une barre de cuivre, et le composant de raccordement (3) dans le procédé sont placés à l'intérieur du revêtement (1) et sont traités thermiquement, au moins au niveau de l'assemblage des pièces, de façon à former un lien métallurgique entre la partie centrale (2) électroconductrice et le revêtement d'acier raffiné (1).

2. Procédé selon la revendication 1, **caractérisé par le fait que** la partie centrale (2) est en grande partie du cuivre et le composant de raccordement (3) est en grande partie de l'étain, après quoi dans le procédé un assemblage principalement en bronze à l'étain est formé entre la partie de revêtement (1) et la partie centrale (2).

3. Procédé selon la revendication 1 ou 2, **caractérisé par le fait que** le composant de raccordement (3) est principalement de l'étain.

4. Procédé selon l'une quelconque des revendications 1 à 3, **caractérisé par le fait que** le revêtement (1) est une partie tubulaire, dont au moins une extrémité est au moins partiellement fermée, au moins durant le traitement thermique.

5. Procédé selon l'une quelconque des revendications 1 à 4, **caractérisé par le fait que** les pièces à assembler (1, 2) sont maintenues substantiellement horizontales pendant le traitement thermique.

6. Procédé selon l'une quelconque des revendications 1 à 5, **caractérisé par le fait qu'**au moins quand les pièces à assembler (1, 2) sont sur un plan horizontal, le composant de raccordement (3) est placé sur le dessus de la partie centrale (2) à l'intérieur du revêtement (1) avant le traitement thermique.

7. Procédé selon l'une quelconque des revendications 1 à 4, **caractérisé par le fait que** les pièces à assembler (1, 2) sont maintenues essentiellement dans une position qui est substantiellement différente de la position horizontale pendant le traitement thermique.

8. Procédé selon l'une quelconque des revendications 1 à 7, **caractérisé par le fait qu'**une barre de suspension destinée à une électrode, en particulier une cathode permanente, est fabriquée dans le procédé.
